# EUROPEAN PATENT APPLICATION

(11) **EP 4 316 824 A1**
(43) Date of publication of application: **07.02.2024**
(21) Application number: 23162200.2
(22) Date of filing: 15.03.2023
(51) Int. Cl.: B32B 27/18, B32B 27/30, B32B 27/32, B32B 27/40

(54) **COMPOSITE STRUCTURE CONTAINING TRANSLUCENT LAYERS WITH UV PROTECTION PROPERTIES**

(30) Priority: 01.08.2022 PT 2022118141
(71) Applicant: TMG - Tecidos Plastificados e Outros Revestimentos para a Indústria Automóvel, S.A., 4770-583 São Cosme do Vale (PT)
(72) Inventor: CARVALHO DA SILVA, LUIS FILIPE, 4770-583 SÃO COSME VALE (PT); CAMPOS DE ARAÚJO MESQUITA DA SILVEIRA, GONÇALO, 4770-583 SÃO COSME VALE (PT); BARBOSA LIMA DA COSTA, MARIA INÊS, 4770-583 SÃO COSME VALE (PT)
(74) Representative: Strehl Schübel-Hopf & Partner

(57) **Abstract**

A UV resistant composite structure containing a translucent structure composed of a film layer and a lacquer layer coating the film layer, wherein the film layer is made of a thermoplastic elastomer, has a thickness of 50 to 500 µm, and contains a UV stabilizer, and wherein the lacquer layer differs from the film layer in its composition, has a thickness of 3 to 50 µm, and contains a UV stabilizer, wherein the UV stabilizers protect the layers and bulky additives contained in a support layer; and the use of the composite structure as a surface material in the interior of a vehicle.

## Description

### Field of the invention

The present invention relates to a composite structure comprising a thin film layer made of a thermoplastic elastomer and a thin lacquer layer coating the film layer, wherein both the film layer and the lacquer layer are translucent and contain a UV stabilizer.

### Background art

The prior art discloses coating materials for the use in the interior of vehicles. JP 2009066967 A discloses a translucent sheet comprising a protective layer and a thermoplastic resin layer, wherein each layer contains UV stabilizers, and being laminated on a base sheet containing pigments. EP 3 666 518 A1 discloses a composite structure comprising a carrier layer, a foamed cover layer containing visible lignocellulosic based components, and a lacquer layer coating the foamed cover layer. EP 3 051 023 A1 discloses a composite structure comprising a first layer containing visible cork particles, a second layer, and a lacquer layer coating the second layer and containing UV stabilizers.

### Problem to be solved by the invention

The highly translucent composite structures disclosed in the prior art do not have UV protection properties Therefore, the problem underlying the present invention was to provide a translucent structure having UV protection properties. This problem was solved by rendering the composite structure thin to maintain its translucent property and by adding UV stabilizers to confer the desired UV protection property.

### Summary of the invention

The present invention covers the following embodiments.
[1] A composite structure containing a support layer, a film layer arranged on the support layer, and a lacquer layer coating the film layer, wherein the film layer is made of a thermoplastic elastomer, has a thickness of 50 to 500 µm, and contains a UV stabilizer, wherein the lacquer layer differs from the film layer in its composition, has a thickness of 3 to 50 µm, and contains a UV stabilizer, wherein the film layer and the lacquer layer form a translucent structure having a transmittance of at least 60 % at λₘₐₓ, wherein λₘₐₓ is the wavelength of the maximum transmittance within the range of 400 nm to 700 nm, wherein the support layer contains bulky additives and the composite structure allows visual perception of the bulky additives through the translucent structure.
[1-1] The composite structure of embodiment [1], wherein the content of the thermoplastic elastomer in the film layer is more than 80 mass%, preferably more than 90 mass%.
[1-2] The composite structure according to any of the preceding embodiments, wherein the visual perception is allowed in the absence of artificial illuminants.
[1-3] The composite structure according to any of the preceding embodiments, wherein the visual perception is allowed in the absence of backlight.
[1-4] The composite structure according to any of the preceding embodiments, wherein the support layer is coated by the film layer.
[1-5] The composite structure according to any of the preceding embodiments, wherein the support layer is opaque and contains pigments.
[1-6] The composite structure according to any of the preceding embodiments, wherein the support layer is translucent.
[1-7] The composite structure according to any of the preceding embodiments, wherein the support layer is translucent and allows the visual perception of the bulky additives that are disposed from the surface to the center of the support layer in thickness direction.
[1-8] The composite structure according to any of the preceding embodiments, wherein the support layer contains thermoplastic elastomers.
[2] The composite structure according to any of the preceding embodiments, wherein the bulky additives have a size, as determined by sieving, of at least 50 µm, preferably at least 100 µm.
[3] The composite structure according to any of the preceding embodiments, wherein the bulky additives are natural particles or natural fibers.
[4] The composite structure according to any of the preceding embodiments, wherein the support layer is made of a polymer.
[5] The composite structure according to any of the preceding embodiments, wherein the support layer has a thickness of 50 µm to 2 mm.
[6] The composite structure according to any of the preceding embodiments, wherein the content of the bulky additives in the support layer is 20 to 70 mass%, preferably 30 to 60 mass%.
[7] The composite structure according to any of the preceding embodiments, wherein the composite structure allows haptic perception of the bulky additives through the translucent structure.
[8] The composite structure according to any of the preceding embodiments, wherein the content of the UV stabilizer is more than 0.1 mass%, preferably more than 0.5 mass%, more preferably more than 1 mass%, both in the film layer and in the lacquer layer.
[8-1] The composite structure according to any of the preceding embodiments, wherein the film layer has a thickness of less than 300 µm, the lacquer layer has thickness of less than 30 µm, and the content of UV stabilizer is more than 0.5 mass% both in the film layer and in the lacquer layer.
[9] The composite structure according to any of the preceding embodiments, wherein at least 90 % of the particles of the UV stabilizer have a size of less than 5 µm, preferably less than 2 µm.
[10] The composite structure according to any of the preceding embodiments, wherein the total content of the thermoplastic elastomer and the UV stabilizer makes up more than 90 mass% of the film layer.
[11] The composite structure according to any of the preceding embodiments, having a light transmittance of at least 90 % at λₘₐₓ.
[12] The composite structure according to any of the preceding embodiments, wherein the crystallinity of the thermoplastic elastomer is less than 30 %.
[13] The composite structure according to any of the preceding embodiments, wherein the surface of the support layer covered by the film layer comprises a structure containing protrusions and/or indentations.
14. The composite structure according to any of the preceding embodiments, wherein a printed structure is sandwiched between the support layer and the film layer.
[14-1] The composite structure according to embodiment [14], wherein the printed structure has a thickness of 1 to 30 µm, preferably 1 to 20 µm and more preferably 3 to 10 µm.
[15] The use of a composite structure as described in any of the preceding embodiments as a surface material in the interior of a vehicle.

In addition, the present application covers the following aspects.
[1] A composite structure containing a film layer and a lacquer layer coating the film layer, wherein the film layer is made of a thermoplastic elastomer, has a thickness of 50 to 500 µm, and contains a UV stabilizer, wherein the lacquer layer differs from the film layer in its composition, has a thickness of 3 to 50 µm, and contains a UV stabilizer, and wherein the composite structure has a transmittance of at least 60 %, preferably at least 80 %, at λₘₐₓ, wherein λₘₐₓ is the wavelength of the maximum transmittance within the range of 400 nm to 700 nm. [1-1] The composite structure of aspect [1], wherein the content of the thermoplastic elastomer in the film layer is more than 80 mass%, preferably more than 90 mass%.
[2] The composite structure according to aspect [1], wherein the UV stabilizer is selected from the group consisting of ultraviolet light absorbers and hindered-amine light stabilizers.
[3] The composite structure according to aspect [1] or [2], wherein the content of the UV stabilizer is more than 0.1 mass%, preferably more than 0.5 mass%, more preferably more than 1 mass%, both in the film layer and in the lacquer layer. [3-1] The composite structure according to any of the preceding aspects, wherein the film layer has a thickness of less than 300 µm, the lacquer layer has thickness of less than 30 µm, and the content of UV stabilizer is more than 0.5 mass% both in the film layer and in the lacquer layer.
[4] The composite structure according to any of the preceding aspects, wherein at least 90 % of the particles of the UV stabilizer have a size of less than 5 µm, preferably less than 1 µm.
[5] The composite structure according to any of the preceding aspects, wherein the total content of the thermoplastic elastomer and the UV stabilizer makes up more than 90 mass% of the film layer.
[6] The composite structure according to any of the preceding aspects, having a light transmittance of at least 90 % at **λ**ₘₐₓ.
[7] The composite structure according to any of the preceding aspects, wherein the crystallinity of the thermoplastic elastomer is less than 30 %, preferably less than 10 %. [7-1] The composite structure according to any of the preceding aspects, wherein the gel content of the thermoplastic elastomer is 5 to 50 %. [7-2] A combination of aspects [7] and [7-1] is preferred. [7-3] A combination of aspects [7-2] and [3-1] is preferred.
[8] The composite structure according to any of the preceding aspects, wherein the thermoplastic elastomer is a thermoplastic polyolefin. [8-1] A combination of aspect [8] with any one of aspects [7], [7-1], [7-2] or [7-3] is preferred.
[9] The composite structure according to any of the preceding aspects, wherein the content of aromatic rings is less than 10 mass%, preferably less than 3 mass%, in the film layer and in the lacquer layer. [9-1] The composite structure according to any of the preceding aspects, in particular according to aspect [1], having a light transmittance of at least 80 % at **λ**ₘₐₓ, wherein the film layer has a thickness of 50 to 300 µm, the content of the thermoplastic elastomer is at least 80 mass% and the content of the UV stabilizer is at least 0.5 mass% in the film layer, at least 90 % of the particles of the UV stabilizer have a size of less than 2 µm, the content of aromatic rings is less than 5 mass% in the film layer and in the lacquer layer, and the crystallinity of the thermoplastic elastomer is less than 20 %.
[10] The composite structure according to any of the preceding aspects, wherein the lacquer layer is based on polyurethane.
[11] The composite structure according to any of the preceding aspects, containing a support layer, the film layer, and the lacquer layer, wherein the support layer is coated with the film layer.
[12] The composite structure according to aspect [11], wherein the support layer contains or is made of polymers and contains additives such as natural fibers, wherein the polymers and the additives differ in their optical properties. [12-1] The composite structure according to aspect [12], wherein the film layer and lacquer layer are selected to allow visual perception of the additives. [12-2] The composite structure according to aspect [12] or [12-1], wherein the additives, the film layer, and lacquer layer are selected to allow haptic perception of the additives. [12-3] The composite structure according to aspects [12] to [12-2], wherein the content of additives such as natural fibers in the support layer is 20 to 70 mass%, preferably 30 to 60 mass%.
[13] The composite structure according to any of aspects [11] to [12-3], wherein the surface of the support layer covered by the film layer comprises a structure containing protrusions and/or indentations. [13-1] The composite structure according to aspect [13], wherein the protrusions and/or indentations, the film layer, and the lacquer layer are selected to allow haptic perception of the protrusions and/or indentations.
[14] The composite structure according to any of aspects [11] to [13-1], wherein a printed structure is sandwiched between the support layer and the film layer. [14-1] The composite structure according to aspect [14], wherein the printed structure has a thickness of 1 to 30 µm, preferably 1 to 20 µm and more preferably 3 to 10 µm.
[15] The use of a composite structure as described in any of the preceding aspects as a surface material in the interior of a vehicle.

### Advantages of the invention

A thin composite structure of the present invention allows the use of a high concentration of the UV stabilizers while keeping the light transmittance high. Thus, the composite structure combines the advantageous effects of a highly translucent material and a UV protective material. The advantageous property of the composite structure as a highly translucent material is that the structures covered by the material are visible in daylight. Hence, the composite structure may be used to achieve decorative effects. The advantageous property of the composite structure as a protective material is that both the material itself and the structures covered by the material are protected against UV light. Hence, the composite structure can be advantageously used as a coating material in the interior of a vehicle.

### Embodiments of the invention

The composite structure of the present invention contains the film layer and the lacquer layer described herein. The lacquer layer coats the film layer. Hence, the two layers are directly bonded to each other without any material such as an adhesive disposed between them.

Herein, the terms "the composite structure", "the support layer", "the film layer", and "the lacquer layer" refer to "the composite structure according to the present invention", "the support layer contained in the composite structure according to the present application", "the film layer contained in the composite structure according to the present invention", and "the lacquer layer contained in the composite structure of the present invention", respectively, unless explicitly stated otherwise.

The structure composed of the lacquer layer and the film layer is highly translucent. Herein, the meaning of the term "translucency" covers the meaning of "transparency". In general, transparency is the physical property of allowing light to pass through the material without being scattered. Translucency is a superset of transparency and allows light to pass through and allows scattering. In other words, a translucent medium allows the passage of light while a transparent medium not only allows the passage of light but also allows for image formation. Transparent materials appear clear. Generally, in the present invention, a translucent layer is defined by having a transmittance of at least 2 %, preferably at least 10 %, more preferably at least 60 % at λₘₐₓ, and an opaque layer is defined by having a transmittance of less than 2 % at λₘₐₓ, wherein λₘₐₓ is the wavelength of the maximum transmittance within the range of 400 nm to 700 nm. Since the value of the light transmittance is affected by absorption, scattering, reflection and the like, the exact light transmittance values of the film may vary depending on the type of light source, the composition and thickness of the film. The light transmittance also differs for different wavelength ranges.

The light transmittance of the structures described in the present application, i.e., the individual layers or any of the composite structures, respectively, is determined as follows: Equipment: Datacolor, model 850; Lamp: Xenon. The total transmittance is measured according to the user's guide provided by the manufacturer. A white plaque (e.g. Spectralon^{®} plaque) is used as an optical standard for transmission calibration and measurement. The white plaque is placed at the front aperture plate. The sample to be measured, e.g., the film or the composite structure, is placed between the sphere opening and the sensor. In the present invention, the light transmittance of a layer structure, e.g., the film or the composite structure, is determined within the range of 400 to 700 nm at the wavelength λₘₐₓ of the maximum light transmittance of the layer structure. The light transmittance [%] is defined as 100% x (transmittance value measured at λₘₐₓ in the presence of the layer structure)/(transmittance value measured at λₘₐₓ in the absence of the layer structure). The light transmission of the composite structure consisting of the film layer and the lacquer layer means the permeability for light emitted at a position facing the underside of the film layer and detected at a position facing the topside of the lacquer layer.

As described in detail below, the polymers of the layers such as the thermoplastic elastomer (TPE) of the film layer may be suitably selected to achieve the desired highly translucent properties. The light transmittance of each layer may be further increased by reducing the amount of oils in the polymer composition. The optical properties of the composite structure are also governed by the distribution of the UV stabilizers in the polymer. In the present invention, the uniform distribution of the UV stabilizers in the film layer and the lacquer layer provides a high light transmittance at a given concentration of the UV stabilizer.

The composite structure contains a UV stabiliser and may contain other additives such as pigments, heat stabilizers, flame retardants, and compatibilizers in the film layer and/or the lacquer layer. Generally, a low concentration of additives may be preferred to achieve a very high light transmittance. Pigments may be selected from silica, TiO₂, CaC0₃, Mg(OH)₂, carbon black, organic red, organic yellow, phthalocyanine blue, e mica, kaolin, clay, coal dust, lignin, talc, BaSO₄, Al(OH)₃, ZnO, and MgO. To provide a composite structure having uniform color and high transparency, the pigments are preferably small to reduce light scattering. The particle size of the pigments is preferably less than 10 µm, more preferably less than 1 µm, even more preferably less than 100 nm. A heat stabilizer helps preserve the properties of a polymer at elevated temperatures. Various heat stabilizers like metallic salts (stabilize PVC), organometallic compounds, non-metallic organic stabilizers, organophosphites and epoxies can be used. Organophosphites protect polymers during the manufacturing process. Phenolic antioxidants protect the polymer during its usable life. Phenolic antioxidants are radical scavengers which prevent thermal degradation of polymers. Their effectiveness increases when used in combination with phosphites, thioethers and light stabilizers. Other examples of antioxidants are sterically hindered phenols such as butylated hydroxytoluene (2,6-di-tert-butyl-4-methylphenol, BHT), butylated hydroxyanisole (BHA), tertiary-butylhydroquinone (TBHQ) and gallates. In particular, halogenated polymers such as poly(vinyl chloride) (PVC) may require the use of heat stabilizers.

The composite structure may be defined by its visible side at the topside of the lacquer layer, and its rear side at the underside of the film layer or the support layer, respectively. A structure at the underside may be bonded either directly or indirectly, e.g., via an adhesive layer.

The composite structure allows visual perception of the bulky additives contained in the support layer through the translucent structure formed by the lacquer layer and the film layer. This means that the components of the properties of the lacquer layer, the film layer, and the support layer are selected such that the bulky additives can be visually perceived by a human with the naked eye, i.e., without the help of an instrument, when looking at the topside of composite structure, i.e., when looking at the visible side having the lacquer layer as the toplayer. The bulky additives can be perceived through the translucent structure when the visible side of the composite structure is exposed to daylight and in the absence of any backlight. However, illumination of the rear side (backlight) or the visible side of the composite structure is not excluded and may be preferred in some embodiments. A lateral illumination may be provided by using light elements arranged in the support layer. The "visual perception of the bulky additives" means that at least some of the bulky additives can be recognized with the naked eye as separate and individual components of the support layer.

The composite structure may contain a structural element that has optical properties and/or haptic properties and that is sandwiched between the support layer and the film layer. In the preparation process, a structural element may be applied on the topside surface of the support layer and/or the underside surface of the film layer. The structural element may be an opaque or colored pattern that forms a graphic design, image, or logo to serve decorative or indicative purposes. For instance, the structural element may be a very thin printed structure that is visible through the composite structure. The printed structure may be thin enough, e.g., 1 to 30 µm, to exclude or thick enough, e.g., more than 50 µm, to allow haptic perception through the film layer and lacquer layer. Examples for applying the pattern are inkjet printing, screen printing, laser printing, or laser etching.

The UV stabilizers are preferably uniformly distributed in the film layer and the lacquer layer to maximize their UV protective effect and to minimize their adverse effect on the light transmittance. A uniform distribution of the UV stabilizer may be achieved by a method comprising the following steps (a) to (e): (a) providing a polymer selected from at least one thermoplastic elastomer; (b) using the polymer to prepare a first composition containing the polymer and a second composition containing the polymer, wherein the first composition and the second composition preferably have identical composition; the first composition and the second composition prepared in step (b) may consist of the polymer provided in step (a) and optional additives; (c) mixing the first composition and a UV stabilizer to obtain a masterbatch containing 1 mass% to less than 30 mass% of the UV stabilizer; (d) mixing the second composition and the masterbatch to obtain a layer raw material having a content of the UV stabilizer of 0.1 mass% to 5.0 mass%; and (e) processing the layer raw material to obtain the film layer or the lacquer layer.

In step (a), the polymer may contain or consist of the thermoplastic elastomer. In step (b), the first composition and the second composition may consist of more than 90 mass%, preferably more than 95 mass% of the polymer provided in step (a) and less than 10 mass%, preferably less than 5 mass% of at least one additive described above. The first composition and the second composition prepared in step (b) may be obtained by splitting a polymer composition to have identical composition. The polymer may be in particulate form, e.g., in the form of granules or pellets. The first composition and the second composition may contain a blend of the particulate polymer and the particulate additives. In step (c), mixing the first composition and a UV stabilizer to obtain a masterbatch may be carried out by mixing the particulate polymer or the blend obtained in step (b) with the particulate UV stabilizer to obtain a blend of the particulate polymer, the particulate UV stabilizer, and, if present, the additive. Alternatively, mixing the first composition and a UV stabilizer to obtain a masterbatch may be carried out by mixing the first composition in molten form and the UV stabilizer and solidifying the mixture to obtain the masterbatch containing or consisting of particles, e.g., granules or pellets, consisting of the polymer, the UV stabilizer, and, if present, the additive. In step (d), mixing the second composition and the masterbatch to obtain a layer raw material is preferably carried out in an extruder in the case of the film layer. The second composition and the masterbatch are preferably melted and mixed in an extruder to achieve a uniform distribution of the polymer, the UV stabilizer, and, if present, the additive in the film layer raw material. In step (e), the film layer raw material that is preferably present in molten form in an extruder is extruded on a carrier in the form of a film and is solidified by cooling to obtain the film layer used in the composite structure of the present invention.

The first composition, the second composition, and the masterbatch may contain the polymer provided in step (a) in molten form, and either mixing in step (d) may be carried out in an extruder and processing in step (e) may comprise extruding and solidifying the film layer raw material; or processing in step (e) comprises knife coating the film layer.

In the present invention, the terms "comprises," "comprising," "including," and "having," are inclusive and therefore specify the presence of stated features, steps, layers and/or components, but do not preclude the presence or addition of one or more other features, steps, layers, components, and/or groups thereof. The method steps, processes, and operations described herein are not to be construed as necessarily requiring their performance in the particular order discussed or illustrated, unless specifically identified as an order of performance. It is also to be understood that additional steps may be employed.

Whenever it is mentioned in the context of this description that individual compositions or layers are based on or made of a certain material, this should be interpreted as the respective material forming the main constituent of the composition or layer, wherein other constituents may also be present in small quantities. In embodiments, the terms "based on" or "made of" a certain material means a content of more than 50 mass%, preferably 90 mass%, and more preferably 95 mass%.

As used herein, the singular forms "a," "an," and "the" may be intended to include the plural forms as well, unless the context clearly indicates otherwise. For instance, components are generally described in the singular form, such as "a" component or "containing a" component. Such singular form formulations are meant to include more than one of the indicated component, unless indicated otherwise.

The term "and/or" includes any and all combinations of one or more of the associated listed items. Percentages (%) are percentages by mass (% by mass) unless explicitly indicated otherwise. The standards and norms mentioned refer to the latest version available at the time this application was filed, unless indicated otherwise.

### Film layer

The composite structure contains a film layer. The film layer has a thickness of 50 µm to 500 µm, preferably 50 µm to 300 µm, and may consist of one layer or at least two layers. Preferably, the film layer consists of a single layer. The film layer consisting of one layer may be compact or foamed. The film layer containing at least two layers may contain a compact layer and a foam layer. In the present invention, the density of the compact film layer or a compact sublayer is higher than 800 kg/m³ and preferably higher than 850 kg/m³, and the density of the foam layer or a foam sublayer is lower than 800 kg/m³, preferably lower than 500 kg/m³. If the film layer comprises at least two sublayers, these sublayers are preferably directly bonded to each other.

The film layer contains or consists of a thermoplastic elastomer (TPE). The film layer may contain more than 80 mass% of TPE and preferably contains 90 mass% of TPE and less than 10 mass% of the total of UV stabilizer and optional additives. In addition to the elastomer, the film layer may contain a thermoplastic or thermoset polymer selected from the group consisting of a polyolefin, a polyurethane, polyvinylchloride, or a combination thereof.

The film layer preferably shows elastic properties and/or thermoplastic properties, more preferably both elastic and thermoplastic properties. The elastic properties and other physical properties such as the melting point and the softness of the film layer are governed by its elastomer content. In the present invention, the terms "elastomer" and "rubber" are used synonymously. They denote polymers that show elastic properties and are crosslinked. Their gel content is preferably between 1 % and 50 %, more preferably between 2 % and 50 %, even more preferably between 5 % and 50 %.

A thermoplastic elastomer (TPE) is defined as an elastomer showing thermoplastic behaviour. The term "thermoplastic" denotes polymers or polymer compositions that show thermoplastic properties, in particular thermoreversibility. TPE behaves rubber-elastically in the range of usual service temperatures. TPE is a copolymer or an elastomer alloy, i.e., a physical mix of polymers that consists of materials with both thermoplastic and elastomeric properties. The desired properties can be obtained by varying the mixing ratios. Generally, there are the following generic classes of TPEs (designations according to ISO 18064): Styrenic block copolymer (TPS), thermoplastic polyolefin elastomer (TPO), thermoplastic vulcanizate (TPV), thermoplastic polyurethane (TPU), thermoplastic copolyester (TPC), melt processing rubbers, and thermoplastic polyamide (TPA).

The TPE may belong to one of said generic classes or may be a blend of TPEs from two or more of said classes. Also, the TPE may be selected from one class and may be one kind of TPE of one class or a blend of two or more kinds of TPEs of one class. The content of TPE in the film layer is preferably at least 50 %. The total content of thermoplastic polymers, i.e., the total of TPE and thermoplastic polymers other than TPE, in the film layer is preferably at least 80 %, more preferably at least 90 %. Preferably, the total content of polymers in the film layer consists of TPE and thermoplastic polymers other than TPE. More preferably, the total content of polymers in the film layer consists of thermoplastic polymers, i.e., TPE and other thermoplastic polymers such as TPO, and is at least 80 %, most preferably at least 90 %.

TPV as one class of TPE combines the characteristics of vulcanized rubber with the processing properties of thermoplastics. TPV contains rubber particles cured by vulcanization. The rubber particles are encapsulated in a thermoplastic matrix.

The rubber may be selected from the group consisting of natural rubber (NR), nitrile butadiene rubber (NBR), hydrogenated nitrile butadiene rubber (HNBR), carboxylated nitrile rubber (XNBR), butyl rubber (IIR), chlorobutyl rubber (CIIR), bromobutyl rubber (BIIR), polychloroprene (CR), styrene-butadiene rubber (SBR), polybutadiene (BR), ethylene-propylene-diene tripolymer (EPDM), ethylene-propylene rubber (EPR or EPM), silicone rubber, acrylic rubber (ACM), ethylene-vinylacetate copolymer rubber (EVM), polyurethane rubber (PU), and any combination of the above. The rubber can also be a styrene based thermoplastic elastomer (STPE).

In particular, the rubber may be selected from the group comprising ethylene/α-olefin copolymer rubber (EAM) as well as ethylene/α-olefin/diene terpolymer rubber (EADM). Preferably the diene in the ethylene-α-olefin-diene rubber is preferably a nonconjugated diene. Suitable non-conjugated dienes include dicyclopentadiene, alkyldicyclopentadiene, 1 ,4-pentadiene, 1 ,4-hexadiene, 1 ,5-hexadiene, 1 ,4- heptadiene, 2-methyl-1 ,5-hexadiene, cyclooctadiene, 1 4-octadiene, 1 ,7-octadiene, 5-ethylidene-2-norbornene, 5-n-propylidene-2-norbornene, and 5-(2-methyl-2-butenyl)-2- norbornene. In preferred embodiments, the rubber component comprises an ethylene-α-olefin-diene rubber. The ethylene-α-olefin-diene rubber may comprise an α-olefin having 3 to 8 carbon atoms. The α-olefin in an EAM or EADM rubber is preferably propylene; in such a case the rubber is referred to as EP(D)M. Here, EPM may also be referred to as EPR. It is also possible to use a mixture of the rubbers mentioned above. For instance, the rubber consists of EPDM and EPR. In that case, EPDM preferably constitutes at least 80 mass% of the total rubber content in the cover layer.

EPDM is made from ethylene, propylene and a diene comonomer that enables crosslinking via sulphur vulcanization systems. EPDM contains crosslinks and is preferably fully cured, i.e. crosslinked to an extent of at least 98%, most preferably to an extent of 100%. The content of propylene is preferably 45% to 85mass%. Preferred dienes used in the manufacture of EPDM rubbers are ethylidene norbornene (ENB), dicyclopentadiene (DCPD), and vinyl norbornene (VNB). EPDM may be compounded with fillers such as carbon black and calcium carbonate, and with plasticizers such as paraffinic oils.

EPR (also referred to as "EPM") is a random copolymer of ethylene and propylene. EPR is similar to EPDM but contains no diene units. It is crosslinked using radical methods such as peroxides. EPR of different properties can be obtained by varying the monomer ratios. EPR preferably comprises 40 to 80 mass%, more preferably 40 to 60 mass% of ethylene units. EPR copolymers containing less than about 40 mass% ethylene generally are known to have poor elasticity at low temperatures, and thus may provide compositions that are too rigid and lack the balance of mechanical properties over a wide temperature range needed for most automotive applications. At high levels of ethylene, generally above about 60 mass% ethylene units, separate crystalline ethylene domains may form within the rubber component, and interphase adhesion and miscibility are reduced.

The thermoplastic elastomer may have the shape of particles. The particles are preferably embedded in a matrix of the other polymers present in the layer. The particle size is preferably below 10 µm, more preferably below 1 µm. Preferably, at least 90 % of the particles have a size of less than 10 µm. The size can be determined by scanning electron microscopy (SEM) of a cross section of the layer. The longest diameter of a particle image in an SEM micrograph is defined as its size.

In the TPV, the rubber particles are encapsulated in a thermoplastic matrix containing thermoplastic polymers such as thermoplastic polyolefin (TPO) and/or thermoplastic polyvinyl chloride (PVC). This property allows thermal bonding of the film layer to underlayers without the use of an adhesive. The thermoplastic property requires that the overall degree of crosslinking is not too high. The gel content is preferably 0 % to 20 %.

TPO is a polymer produced from alkenes such as ethylene, propylene, 1-butene or isobutene by chain polymerization. It is a semi-crystalline thermoplastic polymer that is easy to process. Examples of TPO are polyethylene (PE), polypropylene (PP), polymethylpentene (PMP), polyisobutylene (PIB) and polybutylene (PB, polybutene-1). Polyethylene (PE) is defined here as polymers or copolymers whose proportion by weight of ethylene is more than 50 %. Polypropylene (PP) is defined here as polymers or copolymers whose proportion by weight of propylene is more than 50 %. Examples of TPO are blends of polyethylene (PE) and polypropylene (PP). Examples of PE are HDPE, LDPE and LLDPE. HDPE has weakly branched polymer chains and therefore has a high density between 0.94 g/cm³ and 0.97 g/cm³. LDPE is a thermoplastic made from the monomer ethylene and has a high degree of short- and long-chain branching, which means that the chains do not form crystal structures and LDPE confers isotropic properties. This results in a lower tensile strength. LLDPE is a substantially linear polymer and is made by copolymerization of ethylene with longer-chain olefins. Examples of such olefins are 1-butene, 1-hexene, and 1-octene, which result in short branches in the polymer chain. LLDPE contains branches derived from comonomers of not longer than 1-octene, whereas LDPE also contains branches derived from longer comonomers. LLDPE has higher tensile strength than LDPE, and it exhibits higher impact and puncture resistance than LDPE. LLDPE shows toughness, flexibility, and relative transparency. LLDPE is less shear sensitive than LDPE because of its narrower molecular weight distribution and shorter chain branching. LLDPE confers melt strength. The linearity of LLDPE results from the different manufacturing processes of LLDPE and LDPE. In general, LLDPE is produced at lower temperatures and pressures by copolymerization of ethylene and alpha-olefins. LLDPE can be advantageous for securing excellent moldability on the basis of an appropriate elongation and securing rigidity to be broken at a certain level of strength or more.

The thermoplastic polymer may be thermoplastic polyvinyl chloride (PVC). The properties of PVC are adjusted by adding plasticizers. The addition of plasticizers gives the polymer plastic properties such as yielding and softness. Plasticizers include phthalic acid esters, chloroparaffins, adipic acid esters, phosphoric acid esters acetyltributyl citrate and 1.2-cyclohexanedicarboxylic acid diisononyl ester. PVC may contain up to 40 % plasticizers. PVC can be mixed with additives to improve its physical properties, such as toughness and elasticity, and to enhance processability. Examples of such additives are stabilizers and impact modifiers. For example, PVC without plasticiser can have an elongation at break/tensile strength at break of 10 to 50 %, while PVC can have an elongation at break/tensile strength at break of 170 to 400 %, depending on the structure and quantity of plasticiser.

Examples of blends of rubber with TPO are EPDM with PE and/or PP, blends of EPM with PP and/or PE and ethylene propylene blends, and blends of SEBS with TPO such as PE and/or PP. A composition may contain elastomers such as EPR or EPDM or SEBS to such an extent and having such a degree of crosslinking that the composition is still thermoplastic. For instance, the resin components may consist of 10-90 parts by weight of the polyolefin resin and correspondingly 90-10 parts by weight of the rubber, preferably 10-80/80-20 parts by weight, and more preferably 30-70/70-30 parts by weight. A TPV based on polypropylene (PP) and EPDM rubber may be preferred.

The film layer may contain, in addition to a UV stabilizer, usual additives such as plasticizers, stabilizers, anti-aging agent (e.g. antioxidants), fillers and pigments (silica, TiO₂, CaC0₃, Mg(OH)₂, carbon black, mica, kaolin, clay, coal dust, lignin, talc, BaSO₄, Al(OH)₃, ZnO, and MgO), flame retardants (e.g. antimony trioxide or zinc hydroxystannate), waxes, colorants, compatibilizers and other auxiliary substances (e.g. viscosity aids, adhesion promoters, etc.). However, the content of these additives may be limited due to the requirement of a high translucence of the composite structure.

The film layer and thus the TPE contained therein must be highly translucent. The optical properties of polymers are determined by their structure. Generally, amorphous polymers provide transparency while crystalline polymers provide opacity, particularly in thicker products such as injection molded end products. Crystallinity reduces the transparency by causing refraction and reflection of light and light scattering on the boundaries between the crystalline and amorphous regions. The light transmittance of semicrystalline polymers can be improved through additive technology. Polypropylene injection molded products can be made clearer by incorporation of clarifying agents. The very low-density polyethylene that can be made with metallocene catalysts will also exhibit improved clarity due to a decrease in the degree of crystallinity. Polypropylene provides high clarity due to its slower crystalline growth. Since polyethylene crystallizes very quickly, clarifying agents do not improve the clarity of polyethylene products even at lower thickness. Crystalline structures are generally very ordered and are thus strong and rigid. Typical polymers are "semi-crystalline" having a crystallinity of 10 and 80 %. Examples of semi-crystalline polymers are linear polyethylene (PE) or isotactic polypropylene (PP). Amorphous polymers are flexible and elastic because of their random molecular structure that lets the chains move across each other. On the other hand, amorphous polymers are characterized by a relatively low resistance to heat, toughness at low temperatures and low dimensional stability. Hence, it may be preferred that the polymers are not too amorphous and have a certain degree of crystallinity. In the present invention, the degree of crystallinity may be adjusted to achieve a desired balance of optical properties and other physical properties such as flexibility. In particular, the addition of rubber components may decrease the crystallinity.

The polymers contained in the film layer are preferably resistant to UV irradiation. Since polymers possessing UV-absorbing groups such as aromatic rings are sensitive to UV degradation, the TPE in the film layer preferably contains a very low concentration of aromatic rings, e. g. less than 5 mass%, preferably less than 1 mass%, more preferably less than 0.1 mass% and most preferably 0 mass%. In other words, the polymers are preferably nonaromatic.

### Lacquer layer

The film layer is coated with a lacquer layer, which is the uppermost layer of the composite structure. The lacquer may be a conventional material. The thickness of the lacquer layer is 3 to 50 µm, more preferably 3 to 10 µm. The lacquer layer is applied directly on the film layer as a finish of the composite structure and a protection against chemical agents, physical damage such as scratches or abrasion, and UV radiation. The lacquer layer can further reduce the surface adhesion. Conventional lacquers used for artificial leather for the interior of vehicles can be employed, such as a lacquer layer based on a silicone-containing aliphatic polyurethane. The lacquer layer usually consists of one or more, preferably up to four, transparent layers of lacquer. The lacquer layer is preferably elastic. The properties of the lacquer layer such as elasticity and translucence may be adjusted to correspond to the respective properties of the film layer.

The polymers contained in the film layer are preferably resistant to UV irradiation. To that end, the polymers in the lacquer layer preferably contain a very low concentration of aromatic rings, e. g. less than 5 mass%, preferably less than 1 mass%, more preferably less than 0.1 mass% and most preferably 0 mass%. In other words, the polymers are preferably nonaromatic.

### UV stabilizer

The composite structure contains a UV stabiliser as an additive to achieve the object of maintaining the desired light transmittance after an exposure to UV radiation. UV radiation ranges between wavelengths of 280 and 400 nm. Polymers are sensitive to certain wavelengths of UV radiation. For instance, polypropylene has three maxima at 290-300, 330 and 370 nm and a PVC homopolymer has a maximum at 320 nm. Other examples of UV sensitive polymers are polyethylene (300-310 nm, 340 nm), PVC copolymer (330 nm, 370 nm), and polyurethane (aromatic) (350-415 nm). Suitable UV stabilizers may be Ultraviolet Absorbers and Hindered Amine Light Stabilizers (HALS). Rutile titanium oxide is effective in the 300-400 nm range but is not very useful in the very short wavelength UVB range below 315. Hydroxybenzophenone and hydroxyphenylbenzotriazole have the advantage of being particularly suitable for transparent applications. Other UV absorbers include oxanilides for polyamides, benzophenones for PVC and benzotriazoles and hydroxyphenyltriazines. Hindered Amine Light Stabilizers (HALS) share the 2,2,6,6-tetramethylpiperidine ring structure. HALS are particularly effective in polyolefins and polyurethane. Any of these compounds may be combined. Some of these combinations have synergistic effect. For example, benzotriazoles are often combined with HALS.

The UV stabilizers may be in particulate form, e.g., in the form of powder and/or particles, and may have a size of 0.01 µm to 10 µm, preferably 0.01 µm to 1 µm, more preferably 0.01 µm to 0.1 µm. Smaller sizes of the particulate form may be preferred to avoid or reduce light scattering. To that end, a size of less than 400 nm may be preferable.

### Support layer

The support layer is arranged at the underside of the film layer. Preferably, the support layer is coated with the film layer thus in direct contact with it. The thickness of the support layer is preferably 0.1 to 3.0 mm, more preferably 0.3 to 2.0 mm. The support layer may be a flexible and/or soft or a rigid and/or hard material. In one embodiment, the support layer is transparent, flexible, and soft. The support layer may be opaque due to a high concentration of pigments and/or bulky additives. In that case, only those bulky additives that are exposed at the surface or disposed close to the surface of the support layer may be visible. The support layer may be transparent or translucent, in which case the bulky additives may be visible over the whole or almost over the whole support layer in its thickness direction. In that case, an additional opaque layer may be arranged at the underside of the support layer. The support layer may be made of any material, and is preferably made of polymers such as polyolefin, polyurethan or polyvinyl chloride. Thermoplastic elastomers may be contained to confer elasticity. The support layer may be a compact layer or a foam layer. The support layer contains additives that differ from the polymers in the support layer in their optical properties. Such additives may be color pigments. The support layer contains bulky additives, i.e., bulky components. Bulky means that the dimensions, in particular length and breadth, of the additives are such that visual perception is possible. To this end, the additives have a size of at least 20 µm, preferably at least 50 µm, and more preferably at least 100 µm. The size may be determined and the bulky additives may be selected by sieving. The bulky additives may have any shape such as the shape of spheres, particles, fibers, or discs, and may be natural or synthetic products. A fiber is defined by a ratio of length to largest diameter of at least 10, preferably at least 20, and more preferably at least 50. A particle is defined by an aspect ratio, i.e., a ratio of the largest diameter to the smallest diameter orthogonal to it, of preferably less than 5, more preferably less than 2. The particles may have spherical or oval shape.

An example of a bulky additive is a lignocellulosic based component (LBC). The LBC may be a fiber or a particle. The maximum size, which is the length of the fiber or the maximum diameter of the particle, may be in the range of 100 to 3000 µm, preferably 100 to 1000 µm. In one embodiment, the length of the fibers is 200 to 600 µm, wherein the fibers within said range make up at least 90 wt% of all LBCs in the support layer. An LBC is a natural lignocellulose-containing polymer derived from plants. The LBC contains lignin and cellulose and optionally hemicellulose. The LBC may be a natural fiber and may be sourced from plants. The plants, which produce cellulose fibers can be classified into bast fibers (jute, flax, ramie, hemp, and kenaf), seed fibers (cotton, coir, and kapok), leaf fibers (sisal, pineapple, and abaca), grass and reed fibers (rice, corn, and wheat), and core fibers (hemp, kenaf, and jute) as well as all other kinds (wood and roots). Fibers from oil palm, sisal, flax, and jute are typical examples. The bulky additives may be particles. In that case, the support layer preferably has a thickness of larger than the size of the particles. The LBC particles may be cork particles. The cork particles may be dried and/or exploded before use. Suitable cork particles and methods of their preparation are described in EP 3 051 023 A1. It is preferred that at least 90 vol% of the cork particles contained in the support layer have a diameter of 10 to 500 µm, more preferably 10 to 200 µm. The LBC may be modified using pre-treatments to decrease the hydrophilicity of the LBC to enhance its chemical affinity to and compatibility with the polymer matrix. Light weight LBC may be used to decrease the density of the support layer. The density of the LBC is preferably less than 500 kg/m³, more preferably less than 300 kg/m³. The support layer may be a foamed layer containing polyvinyl chloride, LBC, and hollow microspheres, as described in EP 3 666 518 A1.

The addition of bulky components may result in their haptic perception at the surface of the support layer. Haptic perception means that a human user can sense the structure by the touch of his fingers. The structure and size of the bulky components as well as the light transmission, the color, and the thickness of the composite structure may be suitably selected such that visual and/or haptic perception of the bulky components and thus the support layer is either possible or not possible. The support layer may have protrusions and/or indentations on its topside surface in such dimensions that haptic perception is possible. Since the film layer and the lacquer layer of the composite structure are very thin, e.g., having a total thickness of less than 300 µm, they do not adversely affect the optical and/or haptic properties of the structural elements of the support layer.

## Claims

1. A composite structure containing a support layer, a film layer arranged on the support layer, and a lacquer layer coating the film layer, wherein the film layer is made of a thermoplastic elastomer, has a thickness of 50 to 500 µm, and contains a UV stabilizer, wherein the lacquer layer differs from the film layer in its composition, has a thickness of 3 to 50 µm, and contains a UV stabilizer, wherein the film layer and the lacquer layer form a translucent structure having a transmittance of at least 60 % at λₘₐₓ, wherein λₘₐₓ is the wavelength of the maximum transmittance within the range of 400 nm to 700 nm, and wherein the support layer contains bulky additives and the composite structure allows visual perception of the bulky additives through the translucent structure.

2. The composite structure according to claim 1, wherein the bulky additives have a size of at least 50 µm.

3. The composite structure according to any of the preceding claims, wherein the bulky additives are natural particles or natural fibers.

4. The composite structure according to any of the preceding claims, wherein the support layer is made of a polymer.

5. The composite structure according to any of the preceding claims, wherein the support layer has a thickness of 50 µm to 2 mm.

6. The composite structure according to any of the preceding claims, wherein the content of the bulky additives in the support layer is 20 to 70 mass%.

7. The composite structure according to any of the preceding claims, wherein the composite structure allows haptic perception of the bulky additives through the translucent structure.

8. The composite structure according to any of the preceding claims, wherein the content of the UV stabilizer is more than 0.1 mass% in the film layer and in the lacquer layer.

9. The composite structure according to any of the preceding claims, wherein at least 90 % of the particles of the UV stabilizer have a size of less than 5 µm.

10. The composite structure according to any of the preceding claims, wherein the total content of the thermoplastic elastomer and the UV stabilizer makes up more than 90 mass% of the film layer.

11. The composite structure according to any of the preceding claims, having a light transmittance of at least 90 % at λₘₐₓ.

12. The composite structure according to any of the preceding claims, wherein the crystallinity of the thermoplastic elastomer is less than 30 %.

13. The composite structure according to any of the preceding claims, wherein the surface of the support layer covered by the film layer comprises a structure containing protrusions and/or indentations.

14. The composite structure according to any of the preceding claims, wherein a printed structure is sandwiched between the support layer and the film layer.

15. The use of a composite structure as described in any of the preceding claims as a surface material in the interior of a vehicle.
